# EUROPÄISCHE PATENTSCHRIFT

(11) **EP 0 909 374 B1**
(45) Veröffentlichungstag und Bekanntmachung des Hinweises auf die Patenterteilung: **27.08.2003**
(21) Anmeldenummer: 97931649.4
(22) Anmeldetag: 24.06.1997
(51) Int. Cl.: G01H 1/00, G01H 3/00

(54) **VORRICHTUNG ZUR ERFASSUNG VON ANALOGEN MESSSIGNALEN FÜR DIE AKUSTISCHE DIAGNOSE VON PRÜFLINGEN**
DEVICE FOR COLLECTING ANALOGUE MEASUREMENT SIGNALS FOR THE ACOUSTIC DIAGNOSIS OF TEST PIECES
DISPOSITIF D'ACQUISITION DE SIGNAUX ANALOGIQUES DE MESURE SERVANT A REALISER LE DIAGNOSTIC ACOUSTIQUE DE PIECES A EXAMINER

(30) Priorität: 05.07.1996 DE 29611558 U
(43) Veröffentlichungstag der Anmeldung: 21.04.1999
(73) Patentinhaber: SIEMENS AKTIENGESELLSCHAFT, 80333 München (DE)
(72) Erfinder: HAMADOU, Mehdi, D-91052 Erlangen (DE); MAIER, Karl-Heinz, D-90489 Nürnberg (DE); MÜLLER, Klaus-Dieter, D-90425 Nürnberg (DE)
(86) Internationale Anmeldenummer: DE9701313
(87) Internationale Veröffentlichungsnummer: WO98001728

(56) Entgegenhaltungen:
- WO-A-97/10491
- WO-A-97/14021
- US-A- 4 885 707
- US-A- 5 363 701
- US-A- 5 511 422
- C'T MAGAZIN FÜR COMPUTER TECHNIK, April 1995, HANNOVER, DEUTSCHLAND, Seite 474,478,480 XP002046367

## Beschreibung

Bei der Erfassung insbesondere von größeren Mengen an Meßsignalen mit einem über herkömmliche physikalische Größen, wie z.B. Strom, Spannung und Temperatur, hinausgehenden Bedeutungsinhalt ist es bislang weit verbreitet, komplexe und speziell zusammengestellte Meßanordnungen einzusetzen. Dies ist insbesondere dann der Fall, wenn die von einem technischen Prozeß oder einem technischen Gerät abgenommenen Meßsignale nach speziellen Strategien nachbearbeitet, zusammengefaßt und ausgewertet werden müssen.

Ein derartiger Fall liegt auch bei der akustische Diagnose von Prüflingen vor. Insbesondere bei der Fertigung von Geräten und Großmaschinen, welche bewegliche bzw. rotierende Teilkomponenten aufweisen, ist eine sogenannte akustische Stückprüfung bzw. Diagnose in einem Prüffeld üblich. Derartige Geräte bzw. Maschinen können sein z.B. Motoren, Generatoren, Turbinen aber auch Staubsauger, Gebläse und vieles mehr. Hierbei werden an einem oder mehreren ausgewählten Punkten eines Prüflings, z.B. im Bereich von Lagern, Antrieben oder Wellen, z.B. mikrofonähnliche Schwingungs- oder Beschleunigungsaufnehmer angebracht. Aus den aufgenommenen akustischen bzw. mechanischen Schwingungen und dem sogenannten Körperschall können eine Vielzahl von technischen Aussagen abgeleitet werden. So ist es z.B. möglich, die Fertigungsqualität eines Prüflings bzw. den Zustand der eingesetzten Fertigungsmittel kennzeichnende Istwerte nachzubilden. Ferner können exemplarbedingte Ausprägungen von bekannten Störgrößen, verschleißbedingte Abnutzungserscheinungen und vieles mehr beobachtet werden.

Auch bei der akustischen Prüfung und Diagnose von technischen Gegenständen ist es weit verbreitet, hochleistungsfähige Spezialhardwarekomponenten zur Anbindung von Meßsignalaufnehmern an computerisierte, die Auswertung der erfaßten Meßwerte besorgenden Geräten einzusetzen.

In US-A-4 885 707 wird eine Vorrichtung beschrieben, welche eine tragbare, batteriebetriebene Einheit mit Mikroprozessoren und weiterer Verschaltung enthält und zum Aufnehmen und Verarbeiten von Vibrationssignalen dient und bei der die Möglichkeit von Bedienfehlern signifikant minimiert wird. Mittels eines optischen Strichcodelesers wird ein an einer zu testenden Maschine angebrachter Strichcode eingelesen und bei Vorliegen eines gültigen Strichcodes die automatische Aufzeichnung und Verarbeitung gestartet, wobei der Strichcode zur Identifizierung der Maschine und zur Auswahl von im Speicher der tragbaren Einheit abgelegten maschinenspezifischen Parametern dient. Die Vibrationssignale werden von Messwandlern, insbesondere Beschleunigungsaufnehmern, detektiert und als analoge Spannungssignale über ein Verbindungskabel an die tragbare Einheit übertragen.

Demgegenüber liegt der Erfindung die Aufgabe zugrunde, eine Erfassungsvorrichtung für analoge Meßsignale, welche bei der akustischen Diagnose von technischen Prüflingen auftreten, anzugeben, bei der möglichst keine Spezialinstrumentierung eingesetzt werden muß.

Die Aufgabe wird gelöst mit der im Anspruch 1 angegebenen Vorrichtung. Vorteilhafte, weitere Ausführungsformen derselben sind in den Unteransprüchen enthalten.

Die Erfindung hat den Vorteil, daß zur Meßsignalerfassung ausschließlich standardmäßige Komponenten eingesetzt werden können. Dies wird bei der erfindungsgemäßen Vorrichtung insbesondere dadurch erreicht, daß die bei einem standardmäßigen, z.B. umgangssprachlich als sogenannten Personalcomputer bezeichneten Gerät, die zur Verfügung stehenden einzelnen Schnittstellenbereiche gezielt zur Verwirklichung von technischen Teilfunktionen bei der Meßsignalerfassung im Rahmen der akustischen Diagnose eingesetzt werden. So wird ein erster Bereich von standardmäßigen externen Schnittstellen, bevorzugt der Bereich der standardmäßigen Parallelschnittstellen des Computers, ausschließlich dazu benutzt, um mit wiederum standardmäßigen Schnittstellenkarten bestückt die analogen Meßsignale von Schwingungs- bzw. Beschleunigungsaufnehmern zu Digitalisieren und in den Computer einzugeben.

Die Aufgabe der Steuerung der Meßsignalaufnahme, d.h. insbesondere der programmgesteuerten Einschaltung bzw. Ausschaltung der Meßsignalerfassung, und bevorzugt der Steuerung von gegebenenfalls zusätzlichen zeitkoordinierten automatischen Hantierungen mit dem jeweiligen Prüfling und in dessen Umfeld wird unter Einsatz eines zweiten Bereiches von standardmäßigen externen Schnittstellen des standardmäßigen Computers realisiert. Es handelt sich dabei bevorzugt um den Bereich der standardmäßigen Seriellschnittstellen des standardmäßigen Computers. Besonders geeignet hierfür sind die üblicherweise zum Anschluß eines Druckers vorgesehene Schnittstelle. Hierfür können aber auch die üblicherweise zum Anschluß eines, umgangssprachlich als sogenannte Maus bezeichneten Eingabegerätes vorgesehene Schnittstelle bzw. ein sogenannter Gameport eingesetzt werden. Über diese Schnittstelle werden von mindestens einem externen Schaltmittel erzeugte Triggersignale in den Computer eingelesen, womit Beginn und Ende einer Meßsignalerfassung festgelegt werden können. Derartige Triggersignale können aber auch über die Schnittstelle aus dem zweiten Bereich ausgegeben werden, um z.B. auf die Prüflinge einwirkende automatische Handhabungsgeräte bzw. automatische Fördereinrichtungen zeitkoordiniert zu steuern.

Der erfindungsgemäße gezielte Einsatz der bei einem standardmäßigen Computer vorhandenen Bereiche von externen Schnittstellen zum einen zur Digitalisierung der Meßsignale und zum anderen zum davon getrennten Austausch von steuernden Triggersignalen ermöglicht es, standardmäßige Computerhardware und insbesondere standardmäßige Schnittstellenkarten zur Analog-Digital-Konvertierung der von den Schwingungs- und Beschleunigungsaufnehmern bereitgestellten analogen Meßsignale einzusetzen. Es hat sich in einer überraschenden Weise gezeigt, daß Schnittstellenkarten im ersten Bereich an einer externen Schnittstelle eingesetzt werden können, welche zur digitalen Verarbeitung von annähernd im hörbaren Frequenzbereich liegenden Schwingungen des jeweiligen Prüflings ausgelegt sind. Bei derartigen Schnittstellenkarten kann es sich um standardmäßige, umgangssprachlich als sogenannte Soundkarten gezeichnete Baugruppen handeln, welche überlicherweise zur akustischen Wiedergabe von digitalen, im Speicher des Computers hinterlegten Sprach- und Musikinformationen dienen, d.h. zu Digital-Analog-Konvertierung entsprechender digitale Dateien.

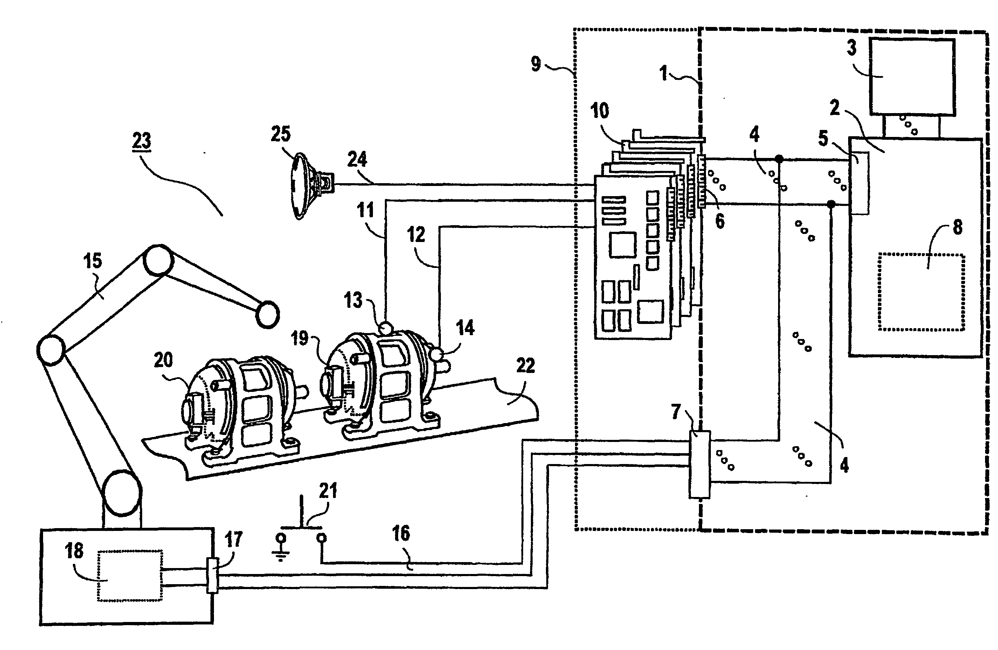

Die Erfindung und weitere Vorteile derselben werden an Hand eines in der Figur dargestellten prinzipiellen Blockschaltbildes näher erläutert.

In der Figur ist ein standardmäßiger Computer 1 in Form eines schematischen Schaltbildes dargestellt. Dabei sind von den üblichen Komponenten eines derartigen Computers auszugsweise nur der Prozessor 2, ein Speicher 3 und der auf z.B. einer sogenannten Hauptplatine des Computers 1 verlaufende Datenbus 4 gezeigt. Ein vom Prozessor 2 bearbeitetes Steuerprogramm 8, welches die zeitkoordinierte Abwicklung der bei einer akustischen Analyse eines Prüflings anfallenden analogen Meßsignale steuert, ist im Block des Prozessors 2 durch einen strichlierten Kasten symbolisiert.

Der Datenbus 4 ist einerseits über eine interne Schnittstelle 5 mit dem Prozessor 2 verbunden, welcher hierüber Daten vom Datenbus 4 entgegennimmt oder in diesen einspeist. Andererseits verzweigt der Datenbus bis zu sogenannten Schnittstellenbereichen. Der Computer 1 gemäß der Erfindung verfügt dabei zumindest über einen ersten Bereich 6 und einen zweiten Bereich 7 mit externen Schnittstellen des Datenbusses 4. In einem separaten Schnittstellenbereich 9, welcher bevorzugt gebildet wird durch ein Gehäuse des Computers, welches in der Figur nicht dargestellt ist, können Abgangsleitungen und Schnittstellenkarten an die externen Schnittstellen des Datenbusses angebracht werden.

Gemäß der Erfindung ist mindestens eine standardmäßige Schnittstellenkarte 10 im ersten Bereich 6 über eine externe Schnittstelle an den Datenbus 4 angekoppelt ist. Diese hat die Aufgabe, analoge Meßsignale, welche der von Schwingungs- bzw. Beschleunigungsaufnehmern bereitgestellt werden, zu Digitalisierung und zumindest in den Computer 1 einzugeben. Im Beispiel der Figur ist ein Motor 19 dargestellt, welcher als ein, einer akustischen Diagnose zu unterziehender Prüfling dient. An diesem sind beispielhaft die Schwingungs- bzw. Beschleunigungsaufnehmer 13,14 angebracht, welche die analogen Meßsignale 11,12 erzeugen. Diese sind ein Maß insbesondere für Schwingungen bzw. Körperschall, welcher an ausgewählten Punkten insbesondere an der Oberfläche des motorischen Prüflings auftreten. Die Meßsignale 11,12 werden einer Schnittstellenkarte 10 zugeführt, welche an eine bevorzugt parallele externe Schnittstelle im Bereich 6 an den Datenbus 4 angeschlossen ist. Die Meßsignale 11,12 werden dann in digitalisierter Form durch ein vom Prozessor 2 bearbeitetes SteuerProgramm 8 z.B. umgeformt bzw. in einem angeschlossenen Speicher 3 hinterlegt.

Die erfindungsgemäße Erfassungsvorrichtung verfügt weiterhin mindestens über ein externes Schaltmittel zur Erzeugung eines binären Triggersignales, welches über eine externe Schnittstelle im zweiten Bereich 7 in den Datenbus 4 eingebbar ist. Bei dem in der Figur dargestellten Beispiel dient ein Taster 21 als Schaltmittel. Das davon ausgelöste Triggersignal 16 wird über eine externe Schnittstelle aus dem zweiten Bereich 7 in den Datenbus 4 des Computers 1 eingegeben. Durch Auswertung des aktuellen Zustandes des binären Triggersignales 16 durch das Steuerprogramm 8 im Computer 1 ist die Eingabe digitalisierter Meßsignale 11,12 in den Computer 1 ein- und ausschaltbar. Im einfachsten Fall kann das Triggersignal durch eine Handbedienung des Tasters 21 aktiviert oder deaktiviert werden.

Der besondere Vorteil der Erfindung wird darin gesehen, daß die Digitalisierung und Eingabe von analogen Meßwerten, welche von Schwingungs- bzw. Beschleunigungsaufnehmern am Prüfling abgenommen wurden, einerseits über Schnittstellenkarten erfolgt, welche an einem ersten Bereich externer Schnittstellen angeschlossen sind, während die Erfassung von den Ablauf eines akustischen Diagnosevorganges steuernden Triggersignalen einen zweiten Bereich externer Schnittstellen des Computers erfolgt. Erst durch diese funktionelle Aufteilung ist es möglich, z.B. akustische Schwingungen an einem Prüfling repräsentierende elektrische Meßsignale mit herkömmlichen Schnittstellenkarten 10 an den externen Schnittstellen eines herkömmlichen Computers 1 zu erfassen.

Es ist besonders vorteilhaft, wenn die externen Schnittstellen im ersten Bereich 6 standardmäßige Parallelschnittstellen des Computers 1 und die externen Schnittstellen im zweiten Bereich 7 standardmäßige Seriellschnittstellen des Computers 1 sind. Diese Ausführung der Erfindung ermöglicht es, daß ein herkömmlicher Computer bei der Meßsignalerfassung eingesetzt wird. Besonders vorteilhaft ist es ferner, wenn die mindestens eine externe Schnittstelle im zweiten Bereich 7, an welche das mindestens eine externe Schaltmittel 21 zur Erzeugung eines binären Triggersignales 16 angeschlossen ist, einer standardmäßigen Schnittstelle entspricht, welche üblicherweise zum Anschluß eines Druckers an den standardmäßigen Computer 1 dient. Mit Hilfe des Steuerprogrammes werden dann den Signalen an der Schnittstelle, welchen üblicherweise Funktionen zur Drucksteuerung zugewiesen sind, z.B. Steuersignalen, welche den Drucker ein- und ausschalten, den Einzug eines neuen Blattes auslösen bzw. z.B. einen Papierstau signalisieren, im Rahmen der Steuerung der Meßsignalerfassung zur akustischen Diagnose benötigte Funktionen zugewiesen. Dies wird weiter unten noch näher erläutert werden. Bei dem in der Figur mit dem Bezugszeichen 16 versehenen Bündel an Triggersignalleitungen handelt es sich somit einerseits um extern erzeugte und den Ablauf des Steuerprogrammes 8 im Prozessor 2 beeinflussende Signale. Andererseits können auch vom Steuerprogramm 8 Triggersignale ausgelöst und über eine externe, bevorzugt serielle Schnittstelle 7 nach außen abgegeben werden.

Die im Beispiel der Figur dargestellte Meßsignalerfassungsvorrichtung enthält vorteilhaft zusätzlich ein automatisches Handhabungsgerät 1, z.B. einen Industrieroboter. Hiermit können die Schwingungs- bzw. Beschleunigungsaufnehmer 13,14 vollautomatisch und insbesondere durch das Steuerprogramm 8 im Computer 1 gesteuert an einen Prüfling 19,20 angelegt bzw. wieder abgenommen werden. Der Start und der Abschluß derartiger Aktionen, d.h. das Vorliegen oder Nichtvorliegen der Prüfbereitschaft des Prüflings 19, kann durch ein entsprechendes binäres Triggersignal 16, welches über eine eigene Steuerung 18 des Handhabungsgerätes 15, eine separate Schnittstelle 17 an dieser Steuerung 18 und eine Schnittstelle im zweiten Bereich 7 eingegeben wird, dem Steuerprogramm 8 im Computer 1 signalisiert werden. Hiermit also eine zeitkoordinierte Steuerung des automatischen Handhabungsgerätes 15 durch das Steuerprogramm 8 im Computer 1 mit Hilfe von binären Triggersignalen 16, welche über eine Schnittstelle aus dem zweiten Bereich 7 ausgegeben bzw. über diesen eingelesen werden möglich.

Das in der Figur dargestellte Beispiel einer Meßsignalerfassungsvorrichtung enthält zusätzlich eine automatische Fördereinrichtung 22, worüber dem automatischen Handhabungsgerät 1 Prüflinge programmgesteuert zugeführt werden können. Es sind beispielhaft die Prüflinge 19 und 20 dargestellt. Dabei wird der Prüfling 19, wie bereits oben beschrieben, einer akustischen Diagnose unterzogen, während der Prüfling 20 für die Durchführung einer derartigen Diagnose bereitsteht. Auch hier kann eine vollautomatische, zeitkoordinierte Steuerung der automatischen Fördereinrichtung 22 durch das Steuerprogramm 8 im Computer 1 mit Hilfe von binären Triggersignalen 16 bewirkt werden, welche über eine Schnittstelle aus dem zweiten Bereich 7 zumindest ausgegeben werden. Es ist auch möglich, daß z.B. die Erreichung einer gewünschten Position der Fördereinrichtung 22 durch ein entsprechendes Triggersignal 16 dem Steuerprogramm 8 signalisiert wird.

Bei dem in der Figur dargestellten Beispiel kann also die Prüfbereitschaft des Prüflings 19 durch ein von der Handhabungsvorrichtung 1 generierten Triggersignales 16 über eine bevorzugt serielle Schnittstelle aus dem zweiten Bereich 7 dem Steuerprogramm 8 signalisiert werden. Dieses veranlaßt daraufhin den Beginn der Aufzeichnung von analogen Meßsignalen 11,12 durch die Schnittstellenkarte 10 an der externen Schnittstelle des zweiten Bereiches 6. Die Meßsignale können vom Prozessor 2 weiterverarbeitet und z.B. in einem Speicher 3 hinterlegt werden. Der Abschluß der Meßsignalaufnahme kann durch ein entsprechendes, vom Steuerprogramm 8 an die Schnittstellenkarte 10 gerichtete und durch den Datenbus 4 dorthin übertragene Befehlsanweisung herbeigeführt werden. Gleichzeitig wird vom Steuerprogramm 8 ein entsprechendes Triggersignal 16 generiert und über eine Schnittstelle aus dem zweiten Bereich 7 dem Handhabungsgerät 15 und der Fördereinrichtung übermittelt. Das Handhabungsgerät 15 entnimmt daraufhin automatisch die Schwingungs- und Beschleunigungsaufnehmer 13,14 vom Prüfling 19, die Fördereinrichtung 22 fährt den Prüfling 20 in eine entsprechende Prüfposition vor und das Handhabungsgerät 15 legt die Schwingungs- und Beschleunigungsaufnehmer 13,14 dann an die entsprechenden Stellen des Prüflings 20 an. Die Folge dieser technischen Aktionen kann vollständig über Triggersignale 16 vom Steuerprogramm 8 aus gesteuert werden.

Bei der Prüfung eines zweiten Prüflings 20 besteht z.B. die Möglichkeit, daß akustische Meßsignale, welche von einem oder mehreren vorangegangenen Prüflingen abgenommen und z.B. im Speicher 3 hinterlegt wurden, über den Datenbus 4 und die Schnittstellenkarte 10 an eine Wiedergabevorrichtung, z.B. einen über eine Leitung 24 an die Schnittstellenkarte 10 angeschlossenen Lautsprecher 25 ausgegeben werden. Betriebspersonal kann somit z.B. einen über Lautsprecher 25 ausgegebenen akustischen Sollgeräuschpegel mit dem Istgeräuschpegel vergleichen, welcher von einem aktuellen Prüfling abgegeben wird. Hiermit sind bereits erste Prüfungen im Rahmen der akustischen Diagnose eines Prüflings möglich.

Die Erfindung hat den besonderen Vorteil, daß ein akustischer Diagnosemeßplatz 23, welcher wie im Beispiel der Figur dargestellt ist, und der mit einer automatischen Handhabungsvorrichtung 15 zumindest für die Positionierung der Meßsignalaufnehmer und einer automatischen Fördereinrichtung 22 die Positionierung der Prüflinge ausgerüstet sein kann, vollautomatisch gesteuert werden kann, ohne daß spezielle Hardwarekomponenten dafür eingesetzt werden müßten. Vielmehr können als Computer 1 und als Schnittstellenkarten 10 für die Digitalisierung bzw. analoge Rückkonvertierung der analogen Meßsignale handelsübliche Standardkomponenten, wie z.B. sogenannten Personalcomputer und Soundkarten, eingesetzt werden.

## Patentansprüche

1. Vorrichtung zur Erfassung von analogen Meßsignalen (11,12) für die akustische Diagnose von Prüflingen (19,20), mit
a) Schwingungs- bzw. Beschleunigungsaufnehmern (13,14), womit vom jeweiligen Prüfling (19,20) analoge Meßsignale (11,12) abgenommen werden können,
b) einem standardmäßigen Computer (1), welcher zumindest einen ersten und zweiten Bereich (6, 7) mit externen Schnittstellen des Datenbusses (4) des Computers (1) aufweist,
c) mindestens einer standardmäßigen Schnittstellenkarte (10), welche im ersten Bereich (6) über eine externe Schnittstelle an den Datenbus (4) angekoppelt ist, und zur Digitalisierung der analogen Meßsignale (11,12) von den Schwingungs- bzw. Beschleunigungsaufnehmern (13,14) und zumindest zu deren Eingabe in den Computer (1) und zur akustischen Wiedergabe von digitalen, in einem Speicher des Computers (1) hintergelegten Sprach- und Musikinformationen dient,
d) mindestens einem Schaltmittel (21,17,18) zur Erzeugung eines binären Triggersignales (16), welches über eine externe Schnittstelle im zweiten Bereich (7) in den Datenbus (4) eingebbar ist, und mit
e) einem Steuerprogramm (8) im Computer (1), womit nach Auswertung des aktuellen Zustandes des binären Triggersignales (16) die Eingabe digitalisierter Meßsignale (11,12) in den (1) Computer ein- und ausschaltbar ist.

2. Vorrichtung nach Anspruch 1, wobei die externen Schnittstellen im ersten Bereich (6) standardmäßige Parallelschnittstellen des Computers (1) sind.

3. Vorrichtung nach Anspruch 1 oder 2, wobei die externen Schnittstellen im zweiten Bereich (7) standardmäßige Seriellschnittstellen des Computers (1) sind.

4. Vorrichtung nach einem der vorangegangenen Ansprüche, wobei mindestens eine externe Schnittstelle im zweiten Bereich (7), an welche das mindestens eine Schaltmittel (21,17,18) zur Erzeugung eines binären Triggersignales (16) angeschlossen ist, eine standardmäßige Schnittstelle ist, welche üblicherweise zum Anschluß eines Druckers an den standardmäßigen Computer (1) dient.

5. Vorrichtung nach einem der vorangegangenen Ansprüche, wobei die mindestens eine standardmäßige Schnittstellenkarte (10), welche im ersten Bereich (6) über eine externe Schnittstelle an den Datenbus (4) angekoppelt ist, derart ausgelegt ist, daß analoge Meßsignale (11,12), welche von den Schwingungs- bzw. Beschleunigungsaufnehmern (13,14) erfaßt werden und annähernd im hörbaren Frequenzbereich liegenden Schwingungen des jeweiligen Prüflings (19,20) entsprechen, digitalisiert werden können.

6. Vorrichtung nach einem der vorangegangenen Ansprüche, mit einem automatischen Handhabungsgerät (1), womit Schwingungs- bzw. Beschleunigungsaufnehmer (13,14) programmgesteuert an einen Prüfling (19,20) angelegt bzw. wieder abgenommen werden können, und womit die Prüfbereitschaft eines Prüflings durch ein entsprechendes binäres Triggersignal (16), welches über eine Schnittstelle in den zweiten Bereich (7) eingegeben wird, dem Steuerprogramm (8) im Computer (1) signalisiert wird.

7. Vorrichtung nach Anspruch 6, wobei eine zeitkoordinierte Steuerung des automatischen Handhabungsgerätes (15) durch das Steuerprogramm (8) im Computer (1) mit Hilfe von binären Triggersignalen (16), welche über eine Schnittstelle aus dem zweiten Bereich (7) ausgegeben werden, bewirkt wird.

8. Vorrichtung nach Anspruch 6 oder 7, mit einer automatischen Fördereinrichtung (22), worüber dem automatischen Handhabungsgerät (1) Prüflinge (19,20) programmgesteuert zugeführt werden.

9. Vorrichtung nach Anspruch 8, wobei eine zeitkoordinierte Steuerung der automatischen Fördereinrichtung (22) durch das Steuerprogramm (8) im Computer (1) mit Hilfe von binären Triggersignalen (16), welche über eine Schnittstelle aus dem zweiten Bereich (7) ausgegeben werden, bewirkt wird.

## Claims

1. Device for acquisition of analogue test signals (11, 12) for acoustic diagnosis of test objects (19, 20), with
a) a vibration sensor and an acceleration sensor (13, 14), it being possible for analogue test signals (11, 12) from the relevant test object (19, 20) to be sensed,
b) a standard computer (1) having at least a first and second area (6, 7) with external interfaces to the data bus (4) of the computer (1)
c) at least one standard interface card (10) coupled to the data bus (4) in the first area (6) via an external interface, and which is used for digitising the analogue test signals (11, 12) from the vibration and acceleration sensors (13, 14) and at least for inputting the digitised test signals into the computer (1), and for the acoustic reproduction of digital voice and music data stored in a memory of the computer (1),
d) at least one switch (21, 17, 18) for generating a binary trigger signal (16), which can be input onto the data bus (4) in the second area (7) via an external interface, and with
e) an executive routine (8) in the computer (1), it being possible to turn on and off the input of digitised test signals (11, 12) into the computer (1) after analysis of the current status of the binary trigger signal (16).

2. Device according to Claim 1, wherein the external interfaces in the first area (6) are standard parallel interfaces of the computer (1).

3. Device according to Claim 1 or 2, wherein the external interfaces in the second area (7) are standard serial interfaces of the computer (1).

4. Device according to one of the preceding claims, wherein at least one external interface in the second area (7), to which the minimum of one switch (21, 17, 18) for generation of a binary trigger signal (16) is connected, is a standard interface which is normally used for connecting a printer to the standard computer (1).

5. Device according to one of the preceding claims, wherein the minimum of one standard interface card (10), which in the first area (6) is coupled to the data bus (4) via an external interface, is designed such that analogue test signals (11, 12) acquired by the vibration and acceleration sensors (13, 14) and corresponding approximately to vibrations of the respective test object (19, 20) in the audible frequency range, can be digitised.

6. Device according to one of the preceding claims, with an automatic manipulator (1), with vibration and acceleration sensors (13, 14) being placed on or removed again from a test object (19, 20) in a program-controlled operation, and with the readiness of a test object for testing being signalled to the executive routine (8) in the computer (1) by a corresponding binary trigger signal (16) input into the second area (7) via an interface.

7. Device according to Claim 6, wherein time-coordinated control of the automatic manipulator (15) by the executive routine (8) is performed in the computer (1) with the help of binary trigger signals (16) which are output from the second area (7) via an interface.

8. Device according to Claim 6 or 7, with an automatic conveyor device (22) conveying test objects (19, 20) in a program-controlled operation to the automatic manipulator (1).

9. Device according to Claim 8, wherein time-coordinated control of the automatic conveyor device (22) by the executive routine (8) is performed in the computer (1) with the help of binary trigger signals (16) which are output from the second area (7) via an interface.

## Revendications

1. Dispositif d'acquisition de signaux de mesure analogiques (11, 12) pour le diagnostic acoustique d'échantillons (19, 20), comportant
a) des enregistreurs d'oscillation ou d'accélération (13, 14) avec lesquels peuvent être prélevés des signaux de mesure analogiques (11, 12) de l'échantillon respectif (19, 20),
b) un ordinateur standard (1) qui comporte au moins une première et une deuxième zone (6, 7) avec des interfaces externes du bus de données (4) de l'ordinateur (1),
c) au moins une carte d'interface standard (10) qui est couplée dans la première zone (6) par l'intermédiaire d'une interface externe au bus de données (4) et qui sert à la numérisation des signaux de mesure analogiques (11, 12) des enregistreurs d'oscillation ou d'accélération (13, 14) et au moins à leur entrée dans l'ordinateur (1) ainsi qu'à la reproduction acoustique d'informations numériques de paroles et de musiques mémorisées dans une mémoire de l'ordinateur (1),
d) au moins un moyen de commutation (21, 17, 18) pour la production d'un signal de déclenchement binaire (16) qui peut être entré dans le bus de données (4) par l'intermédiaire d'une interface externe dans la deuxième zone (7), et
e) un programme de commande (8) dans l'ordinateur (1) avec lequel l'entrée de signaux de mesure numérisés (11, 12) dans l'ordinateur (1) peut être bloquée et débloquée après évaluation de l'état actuel du signal de déclenchement binaire (16).

2. Dispositif selon la revendication 1, dans lequel les interfaces externes dans la première zone (6) sont des interfaces parallèles standards de l'ordinateur (1).

3. Dispositif selon la revendication 1 ou 2, dans lequel les interfaces externes dans la deuxième zone (7) sont des interfaces série standards de l'ordinateur (1).

4. Dispositif selon l'une des revendications précédentes, dans lequel au moins une interface externe dans la deuxième zone (7), à laquelle le ou les moyens de commutation (21, 17, 18) sont raccordés pour la production d'un signal de déclenchement binaire (16), est une interface standard qui sert habituellement au raccordement d'une imprimante à l'ordinateur standard (1).

5. Dispositif selon l'une des revendications précédentes, dans lequel la ou les cartes d'interface standards (10) qui sont couplées dans la première zone (6) par l'intermédiaire d'une interface externe au bus de données (4) sont conçues de telle sorte que des signaux de mesure analogiques (11, 12) qui sont acquis par les enregistreurs d'oscillation ou d'accélération (13, 14) et qui correspondent à des oscillations, proches du domaine de fréquence audible, de l'échantillon respectif (19, 20) peuvent être numérisés.

6. Dispositif selon l'une des revendications précédentes, comportant un appareil de manipulation automatique (15) avec lequel des enregistreurs d'oscillation ou d'accélération (13, 14) peuvent être posés ou enlevés sur un échantillon (19, 20) suivant une commande par programme et avec lequel la disponibilité d'un échantillon pour le test est signalée au programme de commande (8) dans l'ordinateur (1) par un signal de déclenchement binaire (16) correspondant qui est entré dans la deuxième zone (7) par l'intermédiaire d'une interface.

7. Dispositif selon la revendication 6, dans lequel une commande, coordonnée dans le temps, de l'appareil de manipulation automatique (15) est mise en oeuvre par le programme de commande (8) dans l'ordinateur (1) à l'aide de signaux de déclenchement binaires (16) qui sont sortis de la deuxième zone (7) par l'intermédiaire d'une interface.

8. Dispositif selon la revendication 6 ou 7, comportant un dispositif de transport automatique (22) par l'intermédiaire duquel des échantillons (19, 20) sont apportés au dispositif de manipulation automatique (15) suivant une commande par programme.

9. Dispositif selon la revendication 8, dans lequel une commande, coordonnée dans le temps, du dispositif de transport automatique (22) est mise en oeuvre par le programme de commande (8) dans l'ordinateur (1) à l'aide de signaux de déclenchement binaires (16) qui sont sortis de la deuxième zone (7) par l'intermédiaire d'une interface.
